# FASCICULE DE BREVET EUROPEEN

(11) **EP 0 356 358 B1**
(45) Date de publication et mention de la délivrance du brevet: **29.09.1993**
(21) Numéro de dépôt: 89440070.4
(22) Date de dépôt: 12.07.1989
(51) Int. Cl.: A01D 34/66, A01B 73/02

(54) **Faucheuse à châssis perfectionné**
Mähmaschine mit verbessertem Rahmen
Mower with an improved frame

(30) Priorité: 18.08.1988 FR 8811105
(43) Date de publication de la demande: 28.02.1990
(73) Titulaire: KUHN S.A., F-67700 Saverne (FR)
(72) Inventeur: Haberkorn, Jean-Paul, Monswiller F-67700 Saverne (FR)

(56) Documents cités:
- DE-A- 2 524 348
- FR-A- 2 255 839
- FR-A- 2 302 011
- FR-A- 2 557 418
- FR-A- 2 584 889
- GB-A- 1 225 319
- US-A- 3 783 533

## Description

La présente invention concerne une faucheuse destinée à être déplacée durant le travail suivant une direction d'avance et comportant :
- un châssis, et
- un groupe de fauche lié audit châssis au moyen d'une articulation d'axe géométrique dirigé au moins sensiblement suivant la direction d'avance au travail, et pouvant être déplacé d'une première position où il s'étend au moins sensiblement horizontalement et transversalement à la direction d'avance au travail, dans une deuxième position où il s'étend vers le haut, par pivotement autour de l'axe de ladite articulation,
ledit châssis comprenant :
- un organe d'attelage permettant d'atteler la faucheuse à un véhicule tracteur de telle sorte que le groupe de fauche s'étende au travail latéralement à côté de la voie dudit véhicule tracteur,
- une poutre support associée audit groupe de fauche et à l'extrémité extérieure de laquelle ce dernier est lié au moyen de ladite articulation, et
- deux organes de liaison associés à ladite poutre support et chacun lié à l'organe d'attelage au moyen d'une première articulation et à cette poutre support au moyen d'une deuxième articulation, les axes géométriques desdites premières articulations et desdites deuxièmes articulations étant au moins sensiblement parallèles entre eux,
cet organe d'attelage, cette poutre support et ces deux organes de liaison formant un quadrilatère déformable qui permet, pour le transport, de déplacer en sus le groupe de fauche correspondant transversalement en direction de l'organe d'attelage, et vice versa.

On connaît une faucheuse (FR-A-2 240 679) dont le groupe de fauche comporte une barre de coupe munie de disques tournant autour d'axes dirigés vers le haut. Cette faucheuse connue comporte par ailleurs un châssis permettant de l'atteler à un véhicule tracteur. Le groupe de fauche est lié à ce châssis au moyen d'une articulation d'axe dirigé suivant la direction d'avance au travail. A cet effet, le châssis est muni d'une chape, tandis que le groupe de fauche est muni d'un organe support réalisé sous forme de carter de renvoi et susceptible de pivoter dans la chape autour de l'axe dirigé sensiblement suivant la direction d'avance au travail.

Le châssis comporte une poutre support et un organe d'attelage. C'est par l'intermédiaire de ce dernier que la faucheuse est attelée à un véhicule tracteur. Cette poutre support est liée à l'organe d'attelage au moyen d'une liaison articulée et d'un premier organe de liaison. La liaison articulée au moyen de laquelle la poutre support est liée à l'organe d'attelage, est constituée par une simple articulation d'axe vertical. Le premier organe de liaison, quant à lui, est formé par un tirant de sécurité dont la longueur est susceptible d'augmenter à partir d'un certain effort de traction exercé à ses deux extrémités. De cette sorte, le groupe de fauche peut, au cas où il accrocherait un obstacle, se déplacer conjointement avec la poutre support par rapport à l'organe d'attelage en pivotant autour de l'axe de la liaison articulée liant la poutre support audit organe d'attelage.

Dans cette faucheuse connue, l'axe de l'articulation par l'intermédiaire de laquelle le groupe de fauche est lié à la poutre support, s'étend à une certaine distance à l'extérieur de l'encombrement du véhicule tracteur. En sus, cet axe s'étend à une certaine distance du sol. Ainsi, lorsque le groupe de fauche est amené par pivotement autour de cet axe dans sa position de transport, dans laquelle il s'étend vers le haut, ledit groupe de fauche dépasse d'une distance non négligeable l'encombrement du véhicule tracteur.

On connaît une autre faucheuse (FR-A-2 255 839) dont le groupe de fauche comporte une barre de coupe munie de disques tournant autour d'axes dirigés vers le haut. Les disques s'étendant à chaque extrémité de la barre de coupe, sont surmontés par un tambour. Cette faucheuse connue comporte par ailleurs un châssis permettant de l'atteler à un véhicule tracteur. Le groupe de fauche est lié à ce châssis au moyen d'une articulation d'axe dirigé sensiblement suivant la direction d'avance au travail et s'étendant à une certaine distance à l'extérieur de l'encombrement du véhicule tracteur. A cet effet, le châssis est muni d'une chape à laquelle est lié de manière articulée un organe support faisant partie du groupe de fauche. Cet organe support comporte un pied s'étendant sensiblement horizontalement à l'extrémité arrière duquel est fixée une jambe s'étendant sensiblement verticalement. Le pied est fixé par son extrémité avant à la barre de coupe et la jambe est liée à son extrémité supérieure au châssis par l'articulation d'axe dirigé sensiblement suivant la direction d'avance au travail. Cet organe support s'étend, en vue de dessus, entièrement derrière le premier disque. Les disques et les tambours de cette faucheuse connue sont entraînés en rotation par un arbre d'entraînement traversant le rotor surmontant le premier disque. Cet arbre d'entraînement comporte deux parties liées entre elles par un accouplement élastique. A sa partie inférieure, l'arbre d'entraînement est lié en rotation d'une part au premier disque et au tambour surmontant celui-ci et d'autre part, à une roue dentée cylindrique logée dans un carter de la barre de coupe. Cette roue dentée cylindrique transmet le mouvement à une cascade d'autres roues dentées cylindriques également logées dans le carter de la barre de coupe et assurant l'entraînement en rotation des autres disques et de l'autre tambour. L'arbre d'entraînement est lui-même entraîné en rotation par un arbre d'entrée dont l'axe de rotation est confondu avec l'axe de l'articulation liant le groupe de fauche au châssis et par un couple de roues dentées coniques s'étendant au sommet de l'arbre d'entraînement et le liant en rotation audit arbre d'entrée. Cet arbre d'entrée est, quant à lui, entraîné en rotation par la prise de force du véhicule tracteur par l'intermédiaire d'un dispositif à arbre à cardans et à poulies-courroies. Cette faucheuse connue comporte aussi un vérin hydraulique fixé entre le châssis et le groupe de fauche en vue d'amener le groupe de fauche par pivotement autour de l'articulation dans une position de transport dans laquelle le groupe s'étend vers le haut.

Cette faucheuse connue présente la particularité d'avoir un groupe de fauche dont la largeur hors-tout au niveau du sol est égale à la largeur de coupe. Ceci peut être avantageux.

Au transport, cette faucheuse connue présente cependant l'inconvénient de dépasser largement la largeur hors-tout du véhicule tracteur. Ceci est dû au fait que l'axe de l'articulation liant le groupe de fauche au châssis s'étend au-dessus du tambour surmontant le premier disque, c'est-à-dire à une hauteur relativement importante par rapport au sol et de surcroît nettement à l'extérieur de l'encombrement du véhicule tracteur. Ainsi, lorsque le groupe de fauche est pivoté dans sa position de transport dans laquelle il s'étend sensiblement verticalement, le groupe de fauche s'étend largement au-delà de l'articulation d'une distance égale à la valeur de ladite hauteur.

Dans ces faucheuses connues, la largeur hors-tout de l'ensemble véhicule tracteur-faucheuse est donc relativement importante au transport. Ceci peut poser des problèmes pour passer dans des chemins étroits ou par certains portails d'entrée de ferme. Ceci pose aussi des problèmes de visibilité lors de manoeuvres. Comme le centre de gravité du groupe de fauche est relativement déporté latéralement, le châssis de la faucheuse et le dispositif d'attelage du véhicule tracteur sont substantiellement sollicités. En sus, les roues du véhicule tracteur s'étendant du côté opposé à celui où s'étend le groupe de fauche, sont substantiellement déchargées, ce qui peut poser des problèmes de stabilité pour des véhicules tracteur de faible puissance.

On connaît encore une autre faucheuse (DE-A-25 24 348) dont le groupe de fauche comporte une barre de coupe munie de disques tournant autour d'axes dirigés vers le haut. Les disques s'étendant à chaque extrémité de la barre de coupe, sont surmontés par un tambour. Cette faucheuse connue comporte par ailleurs un châssis permettant de l'atteler à un véhicule tracteur. Le groupe de fauche est lié à ce châssis au moyen d'une articulation d'axe dirigé sensiblement suivant la direction d'avance au travail et s'étendant à une certaine distance à l'extérieur de l'encombrement du véhicule tracteur. A cet effet, le châssis est muni d'une douille dans laquelle est guidé un arbre destiné à l'entraînement des disques et des tambours et dont l'axe longitudinal constitue l'axe géométrique de l'articulation liant le groupe de fauche au châssis. Cette articulation permet au groupe de fauche de s'adapter au relief du terrain indépendamment du châssis.

Le châssis comporte une poutre support et un organe d'attelage. C'est par l'intermédiaire de ce dernier que la faucheuse est attelée à un véhicule tracteur. Cette poutre support est liée à l'organe d'attelage au moyen d'une première liaison articulée prévue à son extrémité éloignée du groupe de fauche. Cette première liaison articulée comporte une seule articulation d'axe vertical. La poutre support est par ailleurs liée à l'organe d'attelage au moyen d'une seconde liaison articulée, située entre les deux extrémités de la poutre support. Cette seconde liaison articulée comporte deux leviers, dont le premier est lié à l'organe d'attelage au moyen d'une articulation d'axe vertical et le second à la poutre support également au moyen d'une articulation d'axe vertical. En sus, ces deux leviers sont liés l'un à l'autre au moyen d'une articulation d'axe également vertical. Le premier levier est formé par un tirant de sécurité dont la longueur est susceptible d'augmenter à partir d'un certain effort de traction exercé à ses deux extrémités. De cette sorte, le groupe de fauche peut, au cas où il accrocherait un obstacle, se déplacer conjointement avec la poutre support par rapport à l'organe d'attelage en pivotant autour de l'axe de la première liaison articulée liant la poutre support audit organe d'attelage. Le second levier, quant à lui, comporte un secteur à deux trous qui peuvent être amenés alternativement en face d'un trou de la poutre support en vue de l'introduction d'une broche de verrouillage. L'un des deux trous du second levier définit la position de travail dans laquelle le groupe de fauche s'étend transversalement à la direction d'avance au travail et latéralement à la voie du véhicule tracteur, et l'autre trou du second levier définit la position de transport dans laquelle le groupe de fauche s'étend derrière le véhicule tracteur sensiblement parallèlement à la direction d'avance au transport. Le passage de la position de travail à la position de transport et vice versa du groupe de fauche se fait par pivotement autour de l'axe de la première liaison articulée liant la poutre support à l'organe d'attelage.

Au transport, cette faucheuse connue ne dépasse certes pas la largeur hors-tout du véhicule tracteur. Le centre de gravité de la faucheuse se trouve par contre très loin derrière les roues arrière du véhicule tracteur, ce qui a pour effet de décharger les roues avant du véhicule tracteur et de poser des problèmes de stabilité pour des véhicules tracteurs de faible puissance. Du reste, ceci sollicite également substantiellement le châssis de la faucheuse ainsi que le dispositif d'attelage du véhicule tracteur. Ceci peut enfin poser des problèmes lors de la négociation de virages au cours de laquelle le conducteur doit être très vigilant. En effet, comme la faucheuse est liée rigidement au véhicule tracteur, elle décrit une courbe relativement importante lors de la négociation d'un virage. Cette mise en position de transport nécessite enfin probablement encore de desaccoupler l'arbre à cardans liant la prise de force du véhicule tracteur à l'arbre d'entrée de la faucheuse et s'étendant dans le voisinage de la première liaison articulée, car cet arbre d'entrée pivote conjointement avec la poutre support.

On connaît enfin encore une autre faucheuse (GB-A-1 225 319) qui comporte quatre organes de coupe tournant chacun autour d'un axe respectif au moins sensiblement vertical, lesdits organes de coupe étant agencés suivant une ligne s'étendant en vue de dessus, perpendiculairement à la direction d'avance au travail. Au-dessus de chaque organe de coupe est prévu un carter dans lequel est guidé en rotation ledit organe de coupe et contenant des éléments d'entraînement destinés à l'entraînement en rotation de ce dernier.

Les quatre organes de coupe constituent deux paires d'organes de coupe dans chacune desquelles les deux organes de coupe sont liés rigidement entre eux au moyen d'un tube entretoise fixé à chacune de ses extrémités à un des carters respectifs.

Les deux paires d'organes de coupe sont liées l'une à l'autre au moyen d'une pièce intermédiaire liée de manière rigide par l'une de ses extrémités au carter de l'organe de coupe intérieur de la paire s'étendant en position de travail derrière le véhicule tracteur auquel est attelée la faucheuse, et de manière articulée par l'autre de ses extrémités au carter de l'organe de coupe intérieur de l'autre paire qui s'étend en position de travail, latéralement à côté de la voie dudit véhicule tracteur. Cette liaison articulée est une articulation pivot d'axe géométrique dirigé suivant la direction d'avance au travail. Cette unité ainsi formée par les deux paires d'organes de coupe et la pièce intermédiaire, est liée à un organe d'attelage réalisé sous forme de cadre à trois points d'attelage accouplé à l'attelage arrière hydraulique du véhicule tracteur. Cette liaison est réalisée au moyen de deux organes de liaison, chacun lié à l'organe d'attelage à l'aide d'une première articulation respective et à ladite unité à l'aide d'une deuxième articulation respective. Ces articulations sont du type pivot à axe géométrique s'étendant verticalement.

Du reste, ces articulations sont agencées de telle manière que les deux organes de liaison forment avec l'organe d'attelage et ladite unité un parallélogramme déformable dans un plan horizontal.

Grâce à cet agencement, les organes de coupe peuvent être déplacés latéralement, de telle sorte qu'au travail les organes de coupe soient décalés latéralement par rapport à l'axe médian du véhicule tracteur d'une valeur telle que la paire d'organes de coupe pouvant pivoter par rapport à la pièce intermédiaire, travaille à côté de la voie du véhicule tracteur. Au transport par contre, les organes de coupe s'étendent de manière centrée par rapport audit véhicule tracteur afin de réduire la largeur hors-tout de l'ensemble véhicule tracteur-faucheuse. Si désiré, cette largeur hors-tout peut encore être réduite en faisant tourner la paire d'organes de coupe pivotante vers le haut autour de l'articulation liant ladite paire à la pièce intermédiaire. Dans cette position, la paire d'organes de coupe pivotante est verrouillée au moyen d'une chaîne ou d'un autre moyen de retenue. La position de travail et la position de transport du parallélogramme déformable, quant à elles, sont définies par un tirant de verrouillage respectif lié d'une part à l'un des organes de liaison et d'autre part, à la paire d'organes de coupe non pivotante.

Dans cette faucheuse connue, la mise en position de transport nécessite les opérations suivantes :
- faire pivoter la paire d'organes de coupe pivotante vers le haut
- mettre en place la chaîne ou le moyen de retenue,
- neutraliser le tirant de verrouillage du parallélogramme en position de travail,
- déformer le parallélogramme pour amener les organes de coupe derrière le véhicule tracteur,
- mettre en place le tirant de verrouillage du parallélogramme en position de transport.
Il va de soi que la mise en position de travail s'opère en sens inverse.

Il apparaît donc que la mise en position de transport, respectivement la mise en position de travail de cette faucheuse connue nécessite un grand nombre d'opérations dont certaines sont relativement pénibles, voire dangereuses. En effet, le relevage de la paire d'organes de coupe pivotante nécessite un effort manuel très important compte tenu du poids de ces organes de coupe. Il en est de même lors de l'abaissement de ces organes de coupe pour les amener en position de travail. Il y a, du reste, à ce niveau, un très grave risque

d'accident. Le but de la présente invention consiste à perfectionner la faucheuse connue par la GB-A-1 255 319, tout en conservant l'avantage de la largeur hors-tout réduite au transport, de sorte :
- à réduire le nombre d'opérations nécessaires pour passer de la position de travail à la position de transport et vice versa, et
- à faciliter celles-ci tout en éliminant les risques d'accidents.

A cet effet, la faucheuse selon la présente invention est caractérisée par le fait qu'elle comporte, d'une part, un organe de manoeuvre associé audit groupe de fauche et prévu pour le pivotement de celui-ci de la première position dans la deuxième position, et, d'autre part, des moyens de commande liés directement ou indirectement audit quadrilatère déformable et coopérant avec l'organe de manoeuvre correspondant pour déformer ledit quadrilatère déformable lors du pivotement dudit groupe de fauche de sa première position dans sa deuxième position et vice versa.

Dans la faucheuse de l'invention, le groupe de fauche est pivoté vers le haut ou vers le bas au moyen d'un organe de manoeuvre. Ceci facilite le pivotement du groupe de fauche et élimine les risques d'accidents puisqu'il n'y a pas d'opérations manuelles à effectuer directement sur le groupe de fauche.

Grâce aux moyens de commande qui agissent directement ou indirectement sur le quadrilatère déformable et qui coopèrent avec l'organe de manoeuvre correspondant pour déformer ledit quadrilatère déformable lors du pivotement du groupe de fauche correspondant, il a été possible de réduire substantiellement le nombre d'opérations pour approcher ou éloigner le groupe de fauche de l'axe médian du véhicule tracteur.

Dans la faucheuse de l'invention, le groupe de fauche est, pour le transport, déplacé vers l'axe médian du véhicule tracteur auquel elle est liée. De ce fait, la largeur hors-tout de l'ensemble véhicule tracteur-faucheuse est plus réduite. Par ailleurs, le centre de gravité du groupe de fauche s'étend plus près de l'axe médian du véhicule tracteur, ce qui sollicite moins le châssis de la faucheuse et le dispositif d'attelage du véhicule tracteur et déleste moins les roues du véhicule tracteur s'étendant du côté opposé à celui où s'étend le groupe de fauche.

Selon une caractéristique supplémentaire de l'invention, il est prévu que les moyens de commande déforment le quadrilatère déformable au moins sensiblement simultanément au pivotement du groupe de fauche de sa première position dans sa deuxième position et vice versa.

Un déplacement relativement important peut être obtenu lorsqu'en position de travail, les organes de liaison sont inclinés en direction du côté où s'étend le groupe de fauche correspondant.

Selon une réalisation particulièrement avantageuse, il est prévu que les axes géométriques des premières articulations et les axes géométriques des deuxièmes articulations des deux organes de liaison soient dirigés vers le haut.

Préférentiellement, l'un desdits organes de liaison sera réalisé sous forme de bielle, tandis que l'autre organe de liaison constitue l'organe support par l'intermédiaire duquel l'organe d'attelage supporte la poutre support et le groupe de fauche.

Lorsque l'organe de liaison constituant l'organe support est agencé à l'extrémité de la poutre support éloignée du groupe de fauche et que l'autre organe de liaison s'étend entre ledit organe support et l'extrémité de ladite poutre support où est lié ledit groupe de fauche, il sera aisé de réaliser cet autre organe de liaison sous forme d'un tirant de sécurité dont la longueur est susceptible d'augmenter à partir d'un certain effort de traction exercé à ses extrémités. Ainsi, lorsque le groupe de fauche accroche accidentellement, au cours du travail, un obstacle, ledit groupe de fauche et la poutre support exercent une traction sur le tirant de sécurité qui s'allonge lorsque le seuil du déclenchement est atteint. A ce moment, l'ensemble groupe de fauche-poutre support pourra s'éloigner de l'organe d'attelage en pivotant autour des articulations du second organe de liaison, évitant ainsi d'endommager le groupe de fauche.

Selon une caractéristique supplémentaire de l'invention, il est prévu que la longueur de l'organe de liaison s'étendant le plus près dudit groupe de fauche soit supérieure à la longueur de l'autre organe de liaison, et qu'en position de travail, ledit organe de liaison s'étendant le plus près dudit groupe de fauche soit fortement incliné en direction du côté où s'étend ledit groupe de fauche.

Cette caractéristique est particulièrement intéressante lorsque le groupe de fauche est muni d'un protecteur. Un tel protecteur est en effet nécessaire lorsque le groupe de fauche risque de projeter des pierres par exemple. Or ce protecteur, pour répondre aux normes en vigueur, possède en général des dimensions relativement importantes, de sorte que lors de la mise en position de transport du groupe de fauche, il pourrait apparaître des problèmes d'interférence avec les roues du véhicule tracteur. Mais ces problèmes sont éliminés avec la caractéristique ci-dessus, étant donné que lors du déplacement du groupe de fauche en direction de l'axe médian du véhicule tracteur, ledit groupe de fauche s'éloigne également suffisamment du véhicule tracteur pour que le protecteur puisse au moins partiellement s'étendre dans le sillage de la roue du véhicule tracteur s'étendant dans le voisinage du groupe de fauche.

Selon une caractéristique supplémentaire de l'invention, il est prévu que la mise en position de transport du groupe de fauche soit, d'une manière connue en soi, réalisée par un organe de manoeuvre lié à l'une de ses extrémités au châssis et à l'autre de ses extrémités au groupe de fauche.

Selon une caractéristique supplémentaire de l'invention, il est également prévu qu'un organe de délestage, lié directement ou indirectement à l'organe d'attelage du châssis, allège le groupe de fauche.

Selon une caractéristique supplémentaire de l'invention, il est prévu que les moyens de transmission transmettant le mouvement de rotation de la prise de force du véhicule tracteur jusqu'aux organes d'entraînement du groupe de fauche comportent un organe de transmission lié à la poutre support, qui reçoit le mouvement au moyen d'un arbre de transmission à joints universels, et que ledit organe de transmission est lié à ladite poutre support, de telle sorte qu'en position normale de travail, ledit organe de transmission soit décalé par rapport à l'organe d'attelage en direction du groupe de fauche.

Lors de la mise en position du groupe de fauche, il n'est ainsi pas nécessaire de desaccoupler l'arbre de transmission à joints universels.

D'autres caractéristiques de l'invention sont contenues dans les autres sous-revendications et ressortent clairement de la description ci-après de quelques exemples non limitatifs de réalisation de l'invention faite en référence au dessin annexé sur lequel :
- la figure 1 représente, en position de travail, une faucheuse selon l'invention vue de l'arrière dans le sens d'avance au travail et attelée à un véhicule tracteur,
- la figure 2 représente une vue de dessus de la faucheuse de la figure 1 toujours en position de travail,
- la figure 3 représente une vue de dessus de la faucheuse des figures 1 et 2 en position de transport,
- la figure 4 représente, à une échelle agrandie, une vue, suivant la flèche IV définie sur la figure 1, du groupe de fauche de la faucheuse des figrues 1 à 3,
- la figure 5 représente, à une échelle agrandie, une vue en coupe de la liaison articulée liant la poutre support de la faucheuse des figures 1 à 4 à l'organe d'attelage, la coupe étant réalisée suivant le plan de symétrie vertical du second organe de liaison lorsque ce second organe de liaison est, en vue de dessus, perpendiculaire à l'axe longitudinal de la poutre support,
- la figure 6 représente une vue de dessus schématique d'un deuxième exemple de réalisation de l'invention, le groupe de fauche étant en position de travail,
- la figure 7 représente une vue de dessus schématique du deuxième exemple de réalisation, le groupe de fauche étant en position de transport,
- la figure 8 représente une vue de dessus schématique d'un troisième exemple de réalisation de l'invention , le groupe de fauche étant en position de travail, et
- la figure 9 représente une vue de dessus schématique du troisième exemple de réalisation, le groupe de fauche étant en position de transport.

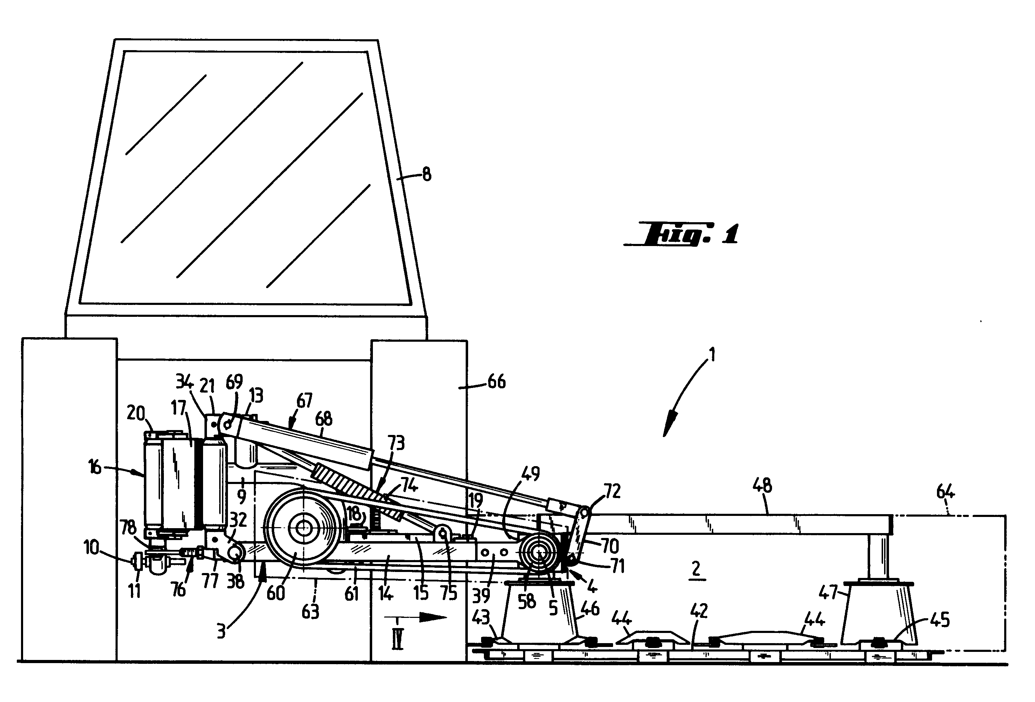

La faucheuse (1), telle que représentée sur les figures 1 à 5, comporte un groupe de fauche (2) et un châssis (3). Le groupe de fauche (2) est lié au châssis (3) par une aticulation (4) d'axe géométrique (5) dirigé sensiblement suivant la direction d'avance (6) au travail.

Au travail, la faucheuse (1) est attelée au dispositif d'attelage (7) d'un véhicule tracteur (8), de telle sorte que le groupe de fauche (2) s'étende, vu suivant la direction d'avance (6) au travail, latéralement à côté de la voie dudit véhicule tracteur (8) et transversalement à la direction d'avance (6) au travail. A cet effet, le châssis (3) est muni d'un organe d'attelage (9) destiné à être accouplé au dispositif d'attelage (7) du véhicule tracteur (8). Cet organe d'attelage (9) comporte deux points d'attelage inférieurs (10) adaptés pour être liés aux deux bras inférieurs (11) du dispositif d'attelage (7), et un point d'attelage supérieur (12) adapté pour être lié à la bielle supérieure (13) dudit dispositif d'attelage (7).

Le châssis (3) comporte par ailleurs une poutre support (14) liée à l'organe d'attelage (9) au moyen d'un premier organe de liaison (15) et d'une liaison articulée (16). Cette liaison articulée (16) comporte un second organe de liaison (17). Le premier organe de liaison (15) est lié à l'organe d'attelage (9) au moyen d'une première articulation (18) et à la poutre support (14) au moyen d'une seconde articulation (19). Le second organe de liaison (17) est également lié à l'organe d'attelage (9) au moyen d'une première articulation cylindrique (20) et à la poutre support (14) au moyen d'une seconde articulation cylindrique (21). Les articulations (18, 19, 20, 21) ont des axes géométriques qui sont sensiblement parallèles entre eux et qui s'étendent sensiblement verticalement. De cette sorte, le premier organe de liaison (15), le second organe de liaison (17), l'organe d'attelage (9) et la poutre support (14) forment un quadrilatère (22) déformable dans un plan sensiblement horizontal.

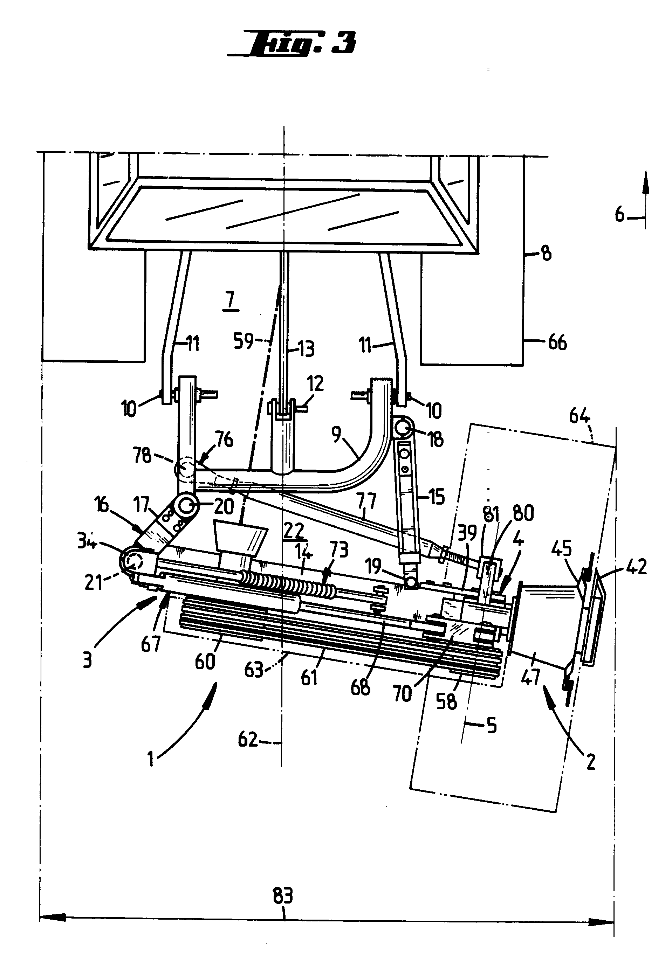

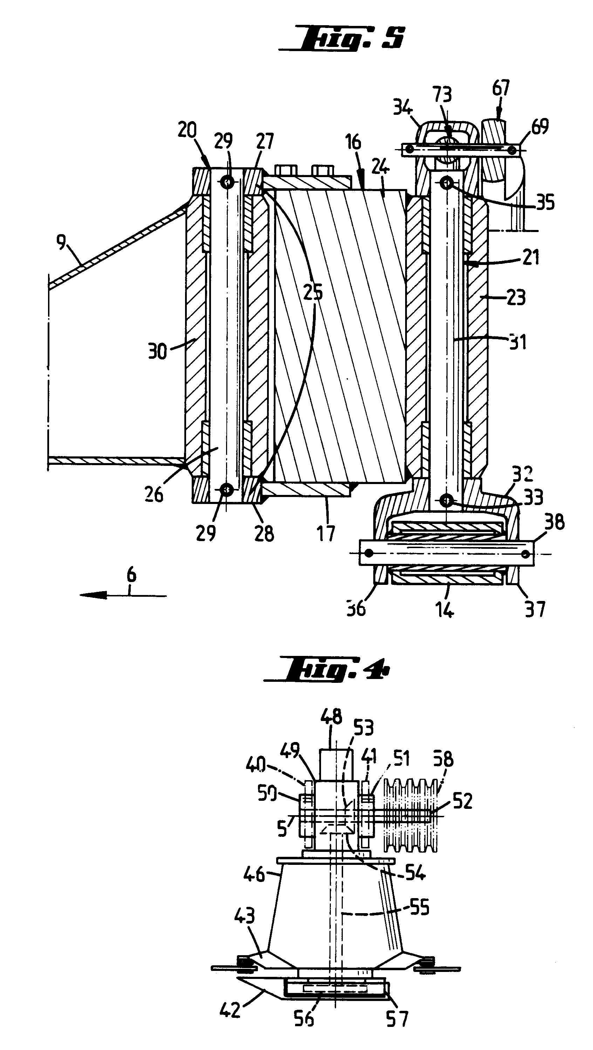

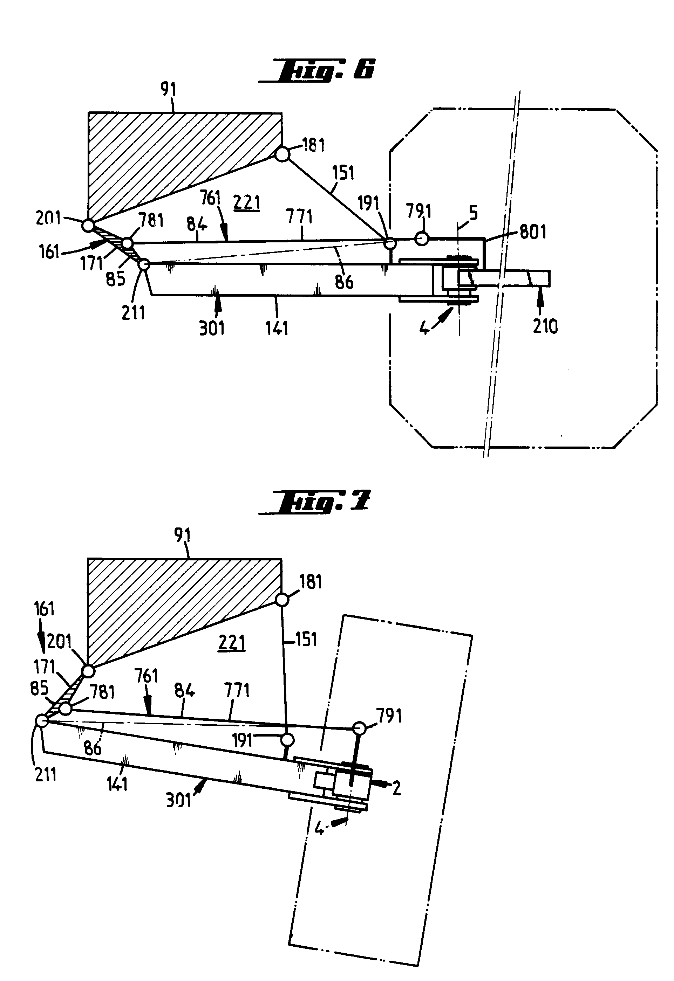

La liaison articulée (16) qui est agencée à l'extrémité de la poutre support (14) éloignée du groupe de fauche (2), est représentée plus en détail sur la figure 5. L'organe de liaison (17) que comporte cette liaison articulée (16), comprend notamment un organe tubulaire (23) et un bras support (24) qui est soudé à cet organe tubulaire (23). A son extrémité éloignée dudit organe tubulaire (23), l'organe de liaison (17) comporte une chape (25) qui supporte un axe (26). Cet axe (26) est lié aux deux ailes (27, 28) de la chape (25) au moyen de goupilles (29). Ledit axe (26) est guidé en rotation dans un élément tubulaire (30) solidaire de l'organe d'attelage (9). Cet élément tubulaire (30) et cet axe (26) constituent la pemière articulation (20). Dans l'organe tubulaire (23) est guidé en rotation un axe (31) qui est lié à son extrémité inférieure dépassant de l'organe tubulaire (23) à une chape (32) au moyen d'une goupille (33) et qui est lié à son extrémité supérieure dépassant de l'organe tubulaire (23) à un organe d'accrochage (34) au moyen d'une goupille (35). L'organe tubulaire (23) et l'axe (31) constituent la seconde articulation (21). Entre les deux ailes (36, 37) de la chape (32) s'étend l'extrémité de la poutre support (14) éloignée du groupe de fauche (2). La poutre support (14) est liée à cette chape (32) au moyen d'un axe (38) dont l'axe géométrique est sensiblement dirigé suivant la direction d'avance (6) au travail. La poutre support (14) est ainsi capable de pivoter quelque peu dans un plan vertical, ce qui contribue à une bonne adaptation du groupe de fauche (2) à la configuration du terrain à faucher. A cet effet, les articulations (18, 19) liant le premier organe de liaison (15) à l'organe d'attelage (9), respectivement à la poutre support (14) sont des articulations sphériques ou éventuellement des articulations cylindriques avec jeu. Sur la figure 5, il apparaît ainsi clairement que l'organe de liaison (17) constitue l'organe support par l'intermédiaire duquel l'organe d'attelage (9) supporte la poutre support (14).

A son extrémité située dans le voisinage du groupe de fauche (2), la poutre support (14) est liée à ce groupe de fauche (2) au moyen de l'articulation (4) d'axe géométrique (5) dirigé sensiblement suivant la direction d'avance (6) au travail.

Le premier organe de liaison (15), réalisé sous forme de bielle, est agencé entre le second organe de liaison (17) et l'extrémité de la poutre support (14) où est lié le groupe de fauche (2). Avantageusement, la bielle formant le premier organe de liaison (15) est consituée par un tirant de sécurité dont la longueur est susceptible d'augmenter à partir d'un certain effort de traction exercé à ses extrémités. Un tel tirant de sécurité est connu de l'homme de l'art et ne sera donc pas décrit plus en détail. Grâce à ce tirant de sécurité, le groupe de fauche (2) pourra se déplacer par rapport à l'organe d'attelage (9), au cas où il accrocherait un obstacle pendant le travail. On évite ainsi d'endommager la faucheuse (1).

Il apparaît, par ailleurs, que la longueur de ce premier organe de liaison (15) est supérieure à la longueur du second organe de liaison (17) et qu'en position de travail, ce premier organe de laison (15) est fortement incliné en direction du côté où s'étend le groupe de fauche (2). Le second organe de liaison (17), quant à lui, est également incliné en direction du côté où s'étend le groupe de fauche (2).

Comme dit ci-avant, le groupe de fauche (2) est lié à la poutre support (14) au moyen de l'articulation (4) d'axe géométrique (5) dirigé sensiblement suivant la direction d'avance (6) au travail. A cet effet, la poutre support (14) est munie d'une chape (39), dans les ailes (40, 41) de laquelle peut pivoter le groupe de fauche (2) d'une manière qui sera décrite ci-après.

Ce groupe de fauche (2) comporte une barre de coupe (42) munie d'organes de coupe (43, 44, 45). Dans l'exemple représenté, ces organes de coupe (43, 44, 45) sont constitués par des disques munis à leur périphérie d'outils de coupe et tournant autour d'axes géométriques dirigés vers le haut. Les organes de coupe (43, 45) s'étendant chacun à une extrémité de la barre de coupe (42), sont surmontés par un tambour (46, 47) qui tourne autour du même axe géométrique que l'organe de coupe (43, 45) qu'il surmonte.

Le groupe de fauche (2) comporte par ailleurs une structure porteuse (48) qui supporte la barre de coupe (42) au travers des tambours (46, 47) d'une manière qui ne sera pas décrite en détail, car elle est connue de l'homme de l'art. Au- dessus du tambour (46) surmontant l'organe de coupe (43) qui est le plus proche du châssis (3), la structure porteuse (48) est munie d'un carter de renvoi (49). Ce carter de renvoi (49) remplit une double fonction. C'est en effet tout d'abord par son intermédiaire que le groupe de fauche (2) est lié à la poutre support (14). Il contient ensuite une partie des organes d'entraînement entraînant les organes de coupe (43, 44, 45) et les tambours, (46, 47).

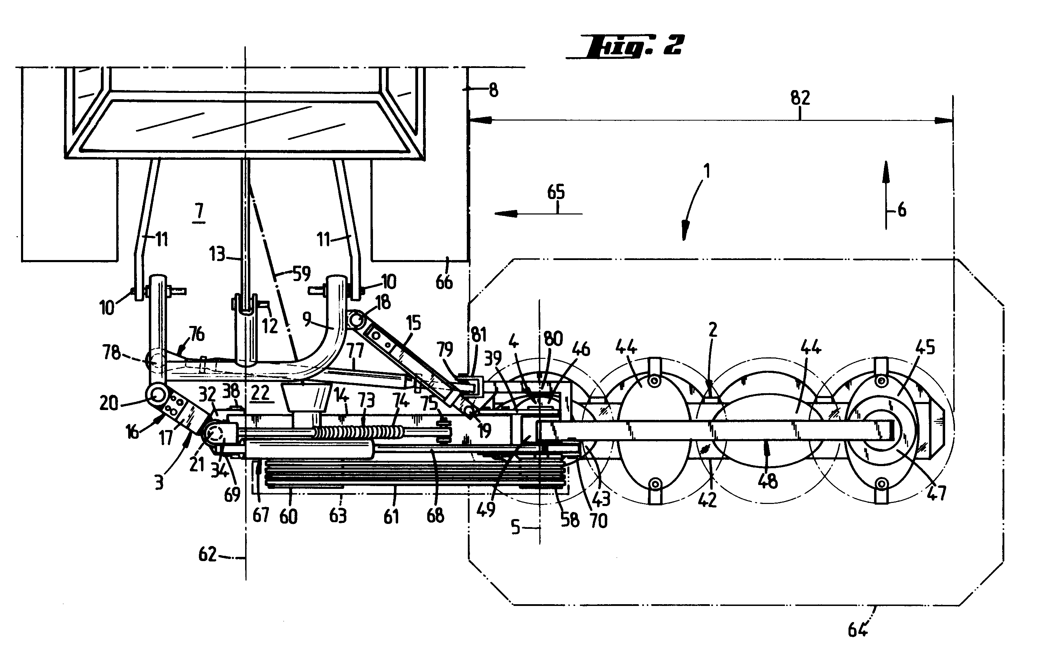

Ceci apparaît de manière détaillée sur la figure 4.

Le carter de renvoi (49) comporte en effet tout d'abord deux portées cylindriques (50, 51) susceptibles de tourner dans les ailes (40, 41) (représentées en traits mixtes sur la figure 4) de la chape (39) de la poutre support (14). Ces portées cylindriques (50, 51) et les ailes (40, 41) de la chape (39) constituent ainsi l'articulation (4). Ces portées cylindriques (50, 51) sont, d'une manière connue de l'homme de l'art, réalisées sous forme de paliers dans lesquels est guidé en rotation un arbre d'entrée (52) dont l'axe de rotation est confondu avec l'axe géométrique (5) de l'articulation (4). A l'intérieur du carter de renvoi (49), l'arbre d'entrée (52) est lié en rotation à une roue dentée conique (53) qui engrène avec une roue dentée conique (54). Cette dernière roue dentée conique (54) est liée en rotation à l'extrémité supérieure d'un arbre d'entraînement (55) dont l'axe de rotation est confondu avec l'axe de rotation de l'organe de coupe (43) et du tambour (46) surmontant cet organe de coupe (43). L'arbre d'entraînement (55) s'étend au travers du tambour (46) et de l'organe de coupe (43). A son extrémité inférieure, il est lié à des organes d'entraînement supplémentaires (56) connus de l'homme de l'art et s'étendant à l'intérieur d'un carter (57) que comporte la barre de coupe (42). Ces organes d'entraînement supplémentaires (56) peuvent, par exemple, être des roues dentées cylindriques engrènant les unes avec les autres.

A l'arrière, l'arbre d'entrée (52) s'étend au-dehors du carter de renvoi (49) et est lié en rotation à une poulie (58). Cette poulie (58) fait partie des organes de transmission de la faucheuse (1) qui transmettent le mouvement depuis la prise de force (non représentée) du véhicule tracteur (8) jusqu'aux organes d'entraînement du groupe de fauche (2). Ces organes de transmission comportent par ailleurs un arbre de transmission à joints universels (59), une poulie (60) et un élément de transmission sans fin (61). L'arbre de transmission (59) est lié en rotation à la poulie (60) fixée à la poutre support (14) et ayant un axe de rotation dirigé sensiblement suivant la direction d'avance (6) au travail. En position de travail, cette poulie (60) est décalée par rapport à l' axe médian (62) du véhicule tracteur (8) en direction du groupe de fauche (2). La transmission du mouvement de la poulie (60) à la poulie (58) est assurée par l'élément de transmission sans fin (61) qui s'enroule sur lesdites poulies (58, 60). Un capot de protection (63) (représenté en traits mixtes) entoure partiellement les poulies (58, 60) et l'organe de transmission sans fin (61).

Le groupe de fauche (2), quant à lui, est muni d'un dispositif de protection (64) (également représenté en traits mixtes) qui entoure les organes de coupe (43, 44, 45). Comme visible sur la figure 2, ce dispositif de protection (64) s'étend, vu suivant la flèche (65), jusqu'au niveau de la partie arrière de la roue (66) du véhicule tracteur (8) la plus proche du groupe de fauche (2).

La faucheuse (1) comporte, par ailleurs, un organe de manoeuvre (67) qui permet de faire pivoter le groupe de fauche (2) dans sa position de transport dans laquelle il s'étend vers le haut. Dans l'exemple de réalisation, cet organe de manoeuvre (67) est un vérin hydraulique (68). Ce vérin hydraulique (68) est lié, à l'une de ses extrémités, à l'organe d'accrochage (34) au moyen d'un axe (69) et, à l'autre de ses extrémités, au groupe de fauche (2) par l'intermédiaire d'un levier pivotant (70). Ce levier pivotant (70) est lié au groupe de fauche (2) par un axe (71) et au vérin hydraulique (68) par un axe (72).

La faucheuse (1) comporte aussi un organe de délestage (73) qui sert à alléger le groupe de fauche (2). Dans l'exemple de réalisation , cet organe de délestage (73) est un ressort de traction (74). Ce ressort de traction (74) est lié, à l'une de ses extrémités, à l'organe d'accrochage (34) au moyen de l'axe (69) et, à l'autre de ses extrémités, à la poutre support (14) au moyen d'un axe (75). Le ressort de traction (74) exerce ainsi un couple de rappel sur la poutre support (14) autour de l'axe (38) qui lie ladite poutre support (14) à la chape (32). Ce couple de rappel est dirigé dans un sens tel, qu'il crée, au niveau de la chape (39) de la poutre support (14), une force dirigée vers le haut.

La faucheuse (1) comporte enfin encore des moyens de commande (76) qui agissent sur le quadrilatère déformable (22). Dans l'exemple de réalisation représenté sur les figures 1 à 3, ces moyens de commande (76) sont constitués par un organe de commande (77)(une barre dans l'exemple représenté) lié, à l'une de ses extrémités, à l'organe d'attelage (9) au moyen d'une première articulation sphérique (78) et, à l'autre de ses extrémités, au groupe de fauche (2) au moyen d'une seconde articulation sphérique (79). Cette seconde articulation (79) est agencée par rapport à l'axe géométrique (5) de l'articulation (4), de telle sorte que, lorsque le groupe de fauche (2) est pivoté vers le haut, il tire sur l'organe de commande (77). A cet effet, le groupe de fauche (2) comporte un bras (80) qui est muni, à son extrémité libre, d'une chape (81) à laquelle est lié l'organe de commande (77) au moyen de l'articulation (79). Sur la figure 1, il apparaît encore clairement, qu'en position normale de travail, l'organe de commande (77) s'étend sensiblement horizontalement, de telle sorte que les articulations (78, 79) s'étendent dans un plan sensiblement horizontal.

La faucheuse (1) des figures 1 à 5, qui vient d'être décrite, fonctionne de la manière suivante.

La faucheuse est attelée au dispositif d'attelage (7) d'un véhicule tracteur (8) par l'intermédiaire de son organe d'attelage (9) et l'arbre de transmission à joints universels (59) est accouplé à la prise de force (non représentée) dudit véhicule tracteur (8).

Au travail, le groupe de fauche (2) s'étend dans sa position de travail telle que représentée sur les figures 1 et 2. Le véhicule tracteur (8) déplace la faucheuse (1) dans le sens d'avance (6) au travail et sa prise de force entraîne en rotation les organes de coupe (43, 44, 45) et les tambours (46, 47) par l'intermédiaire des organes de transmission (59, 60, 61, 58) et des divers organes d'entraînement (52, 53, 54, 55, 56).

En tournant, les organes de coupe (43, 44, 45) coupent le produit à récolter qui se trouve dans la zone de coupe (82) et les tambours (46, 47) calibrent l'andain de produit coupé déposé derrière le groupe de fauche (2), ceci, tout en évitant l'accrochage de produit coupé à l'arbre d'entraînement (55), de même qu'à la partie de la structure porteuse (48) s'étendant à l'intérieur des tambours (46, 47).

Etant donné que la poutre support (14) peut pivoter quelque peu autour de l'axe (38) et que le groupe de fauche (2) peut pivoter par rapport à la poutre support (14), ledit groupe de fauche (2) peut bien suivre la configuration du terrain à faucher. L'organe de délestage (73), quant à lui, réduit la force avec laquelle le groupe de fauche (2) repose sur le sol.

Pour mettre la faucheuse (1) en position de transport (figure 3), on actionne tout d'abord le dispositif d'attelage (7) du véhicule tracteur (8), ce qui a pour effet de lever la faucheuse, lorsque le pivotement de la poutre support (14) autour de l'axe (38) est stoppé. On actionne ensuite l'organe de manoeuvre (67), ce qui provoque le pivotement du groupe de fauche (2), vers le haut, autour de l'articulation (4). La position de transport est atteinte, lorsque le groupe de fauche (2) occupe sensiblement une position verticale. Lorsque le groupe de fauche (2) pivote autour de l'axe géométrique (5) de l'articulation (4), il tire, par l'intermédiaire du bras (80), sur l'organe de commande (77). Comme l'organe de commande (77) est lié à l'organe d'attelage (9) et que sa longueur est fixe, ceci a pour effet de déformer le quadrilatère déformable (22), de telle sorte que la poutre support (14) et le groupe de fauche (2) se déplacent vers l'axe médian (62) du véhicule tracteur (8) c'est-à-dire transversalement en direction de l'organe d'attelage (9). La largeur hors-tout (83) de l'ensemble véhicule tracteur (8) - faucheuse (1) est ainsi réduite. La déformation du quadrilatère déformable (22) sera stoppée lorsque le pivotement du groupe de fauche (2), vers le haut, sera stoppé. La forme du quadrilatère (22) sera alors maintenue dans cette position par l'organe de commande (77).

En sus, comme le premier organe de liaison (15) est plus long que le second organe de liaison (17) et qu'en position de travail il est fortement incliné en direction du côté où s'étend le groupe de fauche (2), le groupe de fauche (2) s'éloigne de la roue (66) du véhicule tracteur (8) lors du pivotement du groupe de fauche (2) en position de transport, de telle sorte que le dispositif de protection (64) puisse s'étendre au moins partiellement dans le sillage de cette roue (66).

Pour amener le groupe de fauche (2) en position de travail, il suffira de faire pivoter ledit groupe de fauche (2), vers le bas, autour de l'articulation (4). Ce faisant, le groupe de fauche (2) pousse sur l'organe de commande (77) par l'intermédiaire du bras (80). Comme l'organe de commande (77) est lié à l'organe d'attelage (9) et comme sa longueur est fixe, ceci aura pour conséquence de déformer le quadrilatère déformable (22) dans un sens tel, que la poutre support (14) et le groupe de fauche (2) s'éloignent de l'axe médian (62) du véhicule tracteur (8). La déformation du quadrilatère déformable (22) sera stoppée lorsque le pivotement du groupe de fauche (2) vers le bas sera stoppé. La forme du quadrilatère (22) sera maintenue dans cette position par l'organe de commande (77), tant que le groupe de fauche (2) ne pivote pas autour de l'axe géométrique (5). Un tel pivotement apparaît toutefois lorsque le groupe de fauche (2) s'adapte à la configuration du sol. On notera cependant, qu'en position de travail, la déformation du quadrilatère déformable (22) reste minime lorsque le groupe de fauche (2) pivote quelque peu autour de l'axe géométrique (5) pour s'adapter à la configuration du sol. Ceci résulte en effet du fait, qu'en position normale de travail, les articulations (78 et 79) liant l'organe de commande (77) à l'organe d'attelage (9), respectivement au bras (80) du groupe de fauche (2), s'étendent dans un plan sensiblement horizontal.

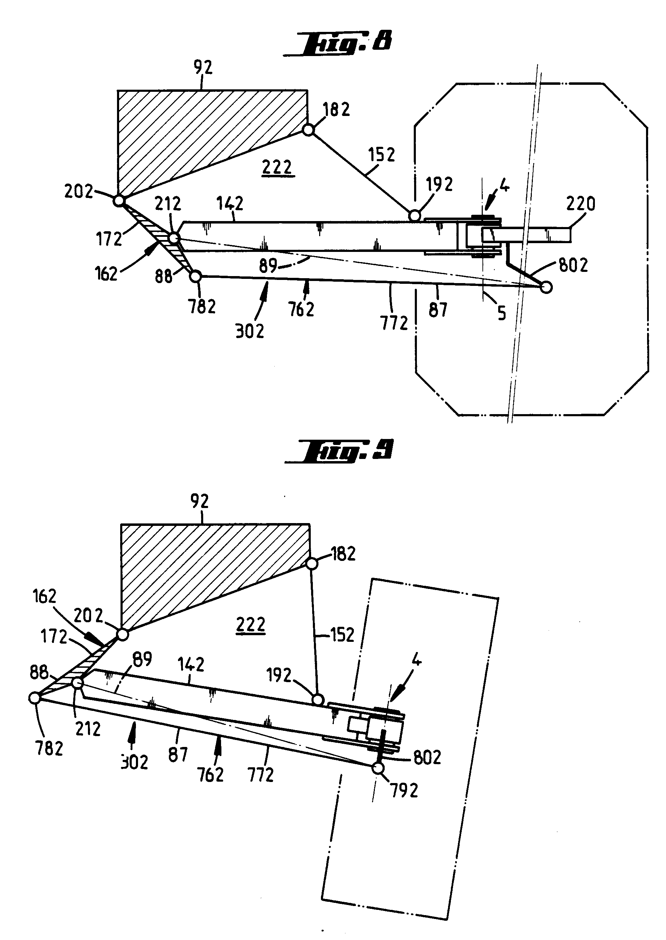

Sur les figures 6 et 7, est représenté un deuxième exemple de réalisation. La poutre support (141) est liée à l'organe d'attelage (91) au moyen de deux organes de liaison (151, 171). Le premier organe de liaison (151) est lié à l'organe d'attelage (91), respectivement à la poutre support (141) au moyen de l'articulation (181), respectivement (191). Le second organe de liaison (171) est, quant à lui, lié à l'organe d'attelage (91), respectivement à la poutre support (141) au moyen de l'articulation (201), respectivement (211). A l'extrémité libre de la poutre support (141) est lié le groupe de fauche (210). Celui-ci est muni d'un bras (801) auquel est lié l'organe de commande (771) au moyen de l'articulation (791). La principale différence entre cet exemple de réalisation et l'exemple de réalisation précédent réside dans le fait que cet organe de commande (771) est lié, à son autre extrémité, à un organe pivotant au moyen de l'articulation (781), et non plus directement à l'organe d'attelage. L'avantage d'un tel agencement réside dans le fait que l'articulation (791), par l'intermédiaire de laquelle l'organe de commande, (771) est lié au groupe de fauche (210), peut s'étendre, pour un déplacement identique du groupe de fauche, plus près de l'axe géométrique (5) de l'articulation (4) liant le groupe de fauche (210) à la poutre support (141).

Dans l'exemple représenté, l'organe pivotant est avantageusement réalisé par l'un des organes de liaison, en l'occurence l'organe de liaison (171) s'étendant à l'extrémité de la poutre support (141) éloignée du groupe de fauche (210). L'articulation (781) liant l'organe de commande (771) à l'organe de liaison (171), s'étend entre les articulations (201, 211) liant ledit organe de liaison (171) à l'organe d'attelage (91), respectivement à la poutre support (141). Les articulations ( 211, 781, 791) forment ainsi un triangle dont le côté (84) liant les articulations (781 et 791), de même que le côté (85) liant les articulations (781 et 211) ont une longueur fixe. Le côté (86) liant les articulations (211 et 791), a, par contre, une longueur variable. L'articulation (791) est agencée sur le groupe de fauche (210), de telle sorte que, lorsque celui-ci est pivoté vers le haut, la longueur du côté (86) liant les articulations (211 et 791), augmente. Comme les deux autres côtés (84 et 85) du triangle ont des longueurs fixes, cela se traduit par une augmentation de l'angle entre ces deux côtés (84 et 85) et, par conséquent, par une déformation du quadrilatère déformable (221) dans un sens tel, que le groupe de fauche (210) se rapproche de l'axe médian du véhicule tracteur.

Sur les figures 8 et 9 est représente un troisième exemple de réalisation. La poutre support (142) est liée à l'organe d'attelage (92) au moyen de deux organes de liaison (152, 172). Le premier organe de liaison (152) est lié à l'organe d'attelage (92), respectivement à la poutre support (142) au moyen de l'articulation (182), respectivement (192). Le second organe de liaison (172) est, quant à lui, lié à l'organe d'attelage (92), respectivement à la poutre support (142) au moyen de l'articulation (202), respectivement (212). A l'extrémité libre de la poutre support (142) est lié le groupe de fauche (220). Celui-ci est muni d'un bras (802) auquel est lié l'organe de commande (772) au moyen de l'articulation (792). Cet organe de commande (772) est lié, à son autre extrémité, à l'organe de liaison (172) (organe pivotant) au moyen de l'articulation (782). Dans cet exemple, l'articulation (782) liant l'organe de commande (772) à l'organe de liaison (172) s'étend au-delà de l'articulation (212) liant ledit organe de liaison (172) à la poutre support (142). Les articulations (212, 782, 792) forment un triangle dont le côté (87) liant l'articulation (782 et 792), de même que le côté (88) liant les articulations (212 et 782) ont une longueur fixe. Le côté (89) liant les articulations (212 et 792) a, par contre, une longueur variable. L'articulation (792) est agencée sur le groupe de fauche (220) de telle sorte que, lorsque celui-ci est pivoté vers le haut, la longueur du côté (89) liant les articulations (212 et 792) diminue. Comme les deux autres côtés (87 et 88) du triangle ont des longueurs fixes, cela se traduit par une diminution de l'angle entre ces deux côtés (87 et 88) et, par conséquent, par une déformation du quadrilatère déformable (222) dans un sens tel, que le groupe de fauche (220) se rapproche de l'axe médian du véhicule tracteur.

Les articulations (781, 791 ; 782, 792) sont, tout comme les articulations (78, 79) de l'exemple précédent, des articulations sphériques. Dans l'invention, ces articulations pourraient cependant être d'un autre type, tel que, par exemple, des articulations universelles, du type cardan par exemple.

Diverses modifications peuvent être apportées aux exemples de réalisation décrits sans qu'on ne sorte pour autant du cadre de la présente invention tel que défini dans les revendications.

## Revendications

1. Faucheuse (1) destinée à être déplacée durant le travail suivant une direction d'avance (6) et comportant :
- un châssis (3 ; 301 ; 302), et
- un groupe de fauche (2 ; 210 ; 220) lié audit châssis (3 ; 301 ; 302) au moyen d'une articulation (4) d'axe géométrique (5) dirigé au moins sensiblement suivant la direction d'avance (6) au travail, et pouvant être déplacé d'une première position où il s'étend au moins sensiblement horizontalement et transversalement à la direction d'avance (6) au travail, dans une deuxième position où il s'étend vers le haut, par pivotement autour de l'axe (5) de ladite articulation (4),
ledit châssis (3 ; 301 ; 302) comprenant :
- un organe d'attelage (9 ; 91 ; 92) permettant d'atteler la faucheuse (1) à un véhicule tracteur (8) de telle sorte que le groupe de fauche (2 ; 210 ; 220) s'étende au travail latéralement à côté de la voie dudit véhicule tracteur (8),
- une poutre support (14 ; 141 ; 142) associée audit groupe de fauche (2 ; 210 ; 220) et à l'extrémité extérieure de laquelle ce dernier est lié au moyen de ladite articulation (4), et
- deux organes de liaison (15, 17 ; 151, 171 ; 152, 172) associés à ladite poutre support (14 ; 141 ; 142) et chacun lié à l'organe d'attelage (9 ; 91 ; 92) au moyen d'une première articulation (18, 20 ; 181, 201 ; 182, 202) et à cette poutre support (14 ; 141 ; 142) au moyen d'une deuxième articulation (19, 21 ; 191, 211 ; 192, 212), les axes géométriques desdites premières articulations (18, 20 ; 181, 201 ; 182, 202) et desdites deuxièmes articulations (19, 21 ; 191, 211 ; 192, 212) étant au moins sensiblement parallèles entre eux,
cet organe d'attelage (9 ; 91 ; 92), cette poutre support (14 ; 141 ; 142) et ces deux organes de liaison (15, 17 ; 151, 171 ; 152, 172) formant un quadrilatère déformable (22 ; 221 ; 222) qui permet, pour le transport, de déplacer en sus le groupe de fauche (2 ; 210 ; 220) correspondant transversalement en direction de l'organe d'attelage (9 ; 91 ; 92), et vice versa, caractérisée par le fait qu'elle comporte, d'une part, un organe de manoeuvre (67) associé audit groupe de fauche (2 ; 210 ; 220) et prévu pour pivoter celui-ci au moins de la première position dans la deuxième position et, d'autre part, des moyens de commande (76 ; 761 ; 762) liés directement ou indirectement audit quadrilatère déformable (22 ; 221 ; 222) et coopérant avec l'organe de manoeuvre (67) correspondant pour déformer ledit quadrilatère déformable (22 ; 221 ; 222) lors du pivotement dudit groupe de fauche (2 ; 210 ; 220) de sa première position dans sa deuxième position et vice versa.

2. Faucheuse selon la revendication 1, caractérisée par le fait que les moyens de commande (76 ; 761 ; 762) déforment le quadrilatère déformable (22 ; 221 ; 222) au moins sensiblement simultanément au pivotement du groupe de fauche (2 ; 210 ; 220) de sa première position dans sa deuxième position et vice versa.

3. Faucheuse selon la revendication 1 ou 2, caractérisée par le fait que lesdits moyens de commande (76) comportent un organe de commande (77) de longueur donnée lié à l'une de ses extrémités à l'organe d'attelage (9) au moyen d'une première articulation (78) et à l'autre de ses extrémités au groupe de fauche (2) au moyen d'une seconde articulation (79) agencée sur ledit groupe de fauche (2) de telle sorte que, lorsque celui-ci est pivoté dans sa deuxième position, il tire sur l'organe de commande (77).

4. Faucheuse selon la revendication 1 ou 2, caractérisée par le fait qu'elle comporte un organe pivotant (171) associé audit groupe de fauche (210) et lié d'une part à l'organe d'attelage (91) au moyen d'une première articulation (201) d'axe géométrique sensiblement parallèle aux axes géométriques des articulations (181, 191, 201, 211) du quadrilatère déformable (221) et d'autre part à la poutre support (141) au moyen d'une seconde articulation (211) d'axe géométrique également sensiblement parallèle aux axes géométriques des articulations (181, 191, 201, 211) du quadrilatère déformable (221), et que les moyens de commande (761) comportent un organe de commande (771) de longueur donnée lié à l'une de ses extrémités à cet organe pivotant (171) au moyen d'une première articulation (781) agencée entre les deux articulations (201, 211) dudit organe pivotant (171), et à l'autre de ses extrémités au groupe de fauche (210) au moyen d'une seconde articulation (791) agencée sur le groupe de fauche (210) de telle sorte que, lorsque celui-ci est pivoté dans sa deuxième position, la distance entre cette seconde articulation (791) liant l'organe de commande (771) au groupe de fauche (210) et la seconde articulation (211) liant l'organe pivotant (171) à la poutre support (141) augmente.

5. Faucheuse selon la revendication 1 ou 2, caractérisée par le fait qu'elle comporte un organe pivotant (172) associé audit groupe de fauche (220) et lié d'une part à l'organe d'attelage (92) au moyen d'une première articulation (202) d'axe géométrique sensiblement parallèle aux axes géométriques des articulations (182, 192, 202, 212) du quadrilatère déformable (221), et d'autre part à la poutre support (142) au moyen d'une seconde articulation (212) d'axe géométrique également sensiblement parallèle aux axes géométriques des articulations (182, 192, 202, 212) du quadrilatère déformable (222), et que les moyens de commande (762) comportent un organe de commande (772) de longueur donnée lié à l'une de ses extrémités à cet organe pivotant (172) au moyen d'une première articulation (782) agencée au-delà des deux articulations (202, 212) dudit organe pivotant (172) et à l'autre de ses extrémités au groupe de fauche (220) au moyen d'une seconde articulation (792) agencée sur le groupe de fauche (220) de telle sorte que, lorsque celui-ci est pivoté dans sa deuxième position, la distance entre cette seconde articulation (792) liant l'organe de commande (772) au groupe de fauche (220) et la seconde articulation (212) liant l'organe pivotant (172) à la poutre support (142) diminue.

6. Faucheuse selon la revendication 4 ou 5, caractérisée par le fait que l'organe pivotant (171 ; 172) est formé par l'un (171 ; 172) des organes de liaison (151, 171 ; 152, 172).

7. Faucheuse selon la revendication 6, caractérisée par le fait que l'organe pivotant (171 ; 172) est formé par l'organe de liaison (171 ; 172) le plus éloigné du groupe de fauche (210 ; 220) correspondant.

8. Faucheuse selon l'une au moins des revendications 3 à 7, caractérisée par le fait que, lorsque ledit groupe de fauche (2 ; 210 ; 220) se trouve en position normale de fauche, les articulations (78, 79 ; 781, 791 ; 782, 792) de l'organe de commande (77 ; 771 ; 772) correspondant s'étendent dans un plan au moins sensiblement horizontal.

9. Faucheuse selon l'une au moins des revendications 3 à 8, caractérisée par le fait que la première (78 : 781 ; 782) et la seconde articulation (79 ; 791 ; 792) de l'organe de commande (77 ; 771 ; 772) sont des articulations sphériques ou des articulations universelles.

10. Faucheuse selon l'une au moins des revendications 1 à 9, caractérisée par le fait qu'en position de travail, les organes de liaison (15, 17 ; 151, 171 ; 152, 172) sont inclinés en direction du côté où s'étend le groupe de fauche (2 ; 210 ; 220).

11. Faucheuse selon l'une au moins des revendications 1 à 10, caractérisée par le fait que les axes géométriques des premières articulations (18, 20 ; 181, 201 ; 182, 202) et les axes géométriques des deuxièmes articulations (19, 21 ; 191, 211 ; 192, 212) des deux organes de liaison (15, 17 ; 151, 171 ; 152, 172) sont dirigés vers le haut.

12. Faucheuse selon la revendication 11, caractérisée par le fait que le quadrilatère déformable (22 ; 221 ; 222) est déformable dans un plan au moins sensiblement horizontal.

13. Faucheuse selon la revendication 11 ou 12, caractérisée par le fait que l'un (15 ; 151 ; 152) desdits organes de liaison (15, 17 ; 151, 171 ; 152, 172) est réalisé sous forme de bielle et que l'autre organe de liaison (17 ; 171 ; 172) constitue l'organe support par l'intermédiaire duquel l'organe d'attelage (9 ; 91 ; 92) supporte la poutre support (14 ; 141 ; 142) et le groupe de fauche (2 ; 210 ; 220).

14. Faucheuse selon la revendication 13, caractérisée par le fait que l'organe de liaison (17 ; 171 ; 172) constituant ledit organe support est agencé à l'extrémité de la poutre support (14 ; 141 ; 142) éloignée du groupe de fauche (2 ; 210 ; 220) et que l'autre organe de liaison (15 ; 151 ; 152) s'étend entre ledit organe support et l'extrémité de ladite poutre support (14 ; 141 ; 142) où est lié ledit groupe de fauche (2 ; 210 ; 220).

15. Faucheuse selon la revendication 13 ou 14, caractérisée par le fait que la poutre support (14 ; 141 ; 142) est, d'une manière connue en soi, liée à l'organe de liaison (17 ; 171 ; 172) constituant ledit organe support correspondant au moyen d'une articulation (38) d'axe géométrique dirigé au moins sensiblement suivant la direction d'avance (6) au travail, et que la première (18 ; 181 ; 182) et la seconde articulation (19 ; 191 ; 192) de l'autre organe de liaison (15 ; 151 ; 152) sont des articulations sphériques ou des articulations cylindriques avec jeu.

16. Faucheuse selon l'une au moins des revendications 11 à 15, caractérisée par le fait que la longueur de l'organe de liaison (15 ; 151 ; 152) s'étendant le plus près dudit groupe de fauche (2 ; 210 ; 220) est supérieure à la longueur de l'autre organe de liaison (17 ; 171 ; 172), et qu'en position de travail, ledit organe de liaison (15 ; 151 ; 152) s'étendant le plus près dudit groupe de fauche (2 ; 210 ; 220) est fortement incliné en direction du côté où s'étend ledit groupe de fauche (2 ; 210 ; 220).

17. Faucheuse selon l'une au moins des revendications 11 à 16, caractérisée par le fait que l'organe de liaison (15 ; 151 ; 152) s'étendant le plus près dudit groupe de fauche (2 ; 210 ; 220), est constitué sous forme d'un tirant de sécurité connu en soi, dont la longueur est susceptible d'augmenter à partir d'un certain effort exercé à ses extrémités.

18. Faucheuse selon l'une au moins des revendications 1 à 17, caractérisée par le fait que ledit organe de manoeuvre (67) est lié à l'une de ses extrémités au châssis (3 ; 301 ; 302) et à l'autre de ses extrémités au groupe de fauche (2 ; 210 ; 220) correspondant.

19. Faucheuse selon la revendication 18, caractérisée par le fait que l'extrémité dudit organe de manoeuvre (67) liée au châssis (3 ; 301 ; 302), est liée directement ou indirectement à l'un (17 ; 171 ; 172) des deux organes de liaison (15, 17 ; 151, 171 ; 152, 172).

20. Faucheuse selon la revendication 19, caractérisée par le fait que ladite extrémité dudit organe de manoeuvre (67) est liée directement ou indirectement à l'organe de liaison (17 ; 171 ; 172) le plus éloigné du groupe de fauche (2 ; 210 ; 220).

21. Faucheuse selon la revendication 19 ou 20, caractérisée par le fait que ladite extrémité dudit organe de manoeuvre (67) est liée directement ou indirectement audit organe de liaison (17 ; 171 ; 172) dans le voisinage de la seconde articulation (21 ; 211 ; 212) liant cet organe de liaison (17 ; 171 ; 172) à la poutre support (14 ; 141 ; 142).

22. Faucheuse selon l'une au moins des revendications 18 à 21, caractérisée par le fait que ledit organe de manoeuvre (67) est un vérin hydraulique (68).

23. Faucheuse selon l'une au moins des revendications 1 à 22, caractérisée par le fait que, d'une manière connue en soi, un organe de délestage (73), lié directement ou indirectement à l'organe d'attelage (9 ; 91 ; 92) du châssis (3 ; 301 ; 302), allège ledit groupe de fauche (2 ; 210 ; 220).

24. Faucheuse selon la revendication 23, caractérisée par le fait que l'extrémité dudit organe de délestage (73) liée directement ou indirectement à l'organe d'attelage (9 ; 91 ; 92), est liée directement ou indirectement à l'un (17 ; 171 ; 172) des deux organes de liaison (15, 17 ; 151, 171 ; 152, 172).

25. Faucheuse selon la revendication 24, caractérisée par le fait que ladite extrémité dudit organe de délestage (73) est liée directement ou indirectement à l'organe de liaison (17 ; 171 ; 172) le plus éloigné du groupe de fauche (2 ; 210 ; 220) correspondant.

26. Faucheuse selon la revendication 24 ou 25, caractérisée par le fait que ladite extrémité dudit organe de délestage (73) est liée directement ou indirectement audit organe de liaison (17 ; 171 ; 172) dans le voisinage de la seconde articulation (21 ; 211 ; 212) liant cet organe de liaison (17 ; 171 ; 172) à la poutre support (14 ; 141 ; 142).

27. Faucheuse selon l'une au moins des revendications 23 à 26, caractérisée par le fait que ledit organe de délestage (73) comporte au moins un ressort de traction (74).

28. Faucheuse selon l'une au moins des revendications 1 à 27, caractérisée par le fait qu'elle comporte, d'une manière connue en soi, des moyens de transmission (58, 59, 60, 61) transmettant le mouvement de rotation depuis la prise de force du véhicule tracteur (8) jusqu'aux organes d'entraînement (52, 53, 54, 55, 56) dudit groupe de fauche (2 ; 210 ; 220) et comportant un organe de transmission (60) lié à la poutre support (14 ; 141 ; 142), qui reçoit le mouvement au moyen d'un arbre de transmission à joints universels (59), ledit organe de transmission (60) étant lié à ladite poutre support (14 ; 141 ; 142) de telle sorte qu'en position normale de travail, ledit organe de transmission (60) soit décalé par rapport à l'organe d'attelage (9 ; 91 ; 92) en direction dudit groupe de fauche (2 ; 210 ; 220).

29. Faucheuse selon l'une au moins des revendications 1 à 28, caractérisée par le fait que ledit groupe de fauche (2 ; 210 ; 220) comporte, à son extrémité la plus proche du châssis (3 ; 301 ; 302), un tambour rotatif (46) au-dessus duquel s'étend un carter de renvoi (49) qui comporte un arbre d'entrée (52) dont l'axe de rotation est confondu avec l'axe géométrique (5) de l'articulation (4) liant ledit groupe de fauche (2 ; 210 ; 220) à la poutre support (14 ; 141 ; 142) et qui entraîne un arbre d'entraînement (55) traversant ledit tambour rotatif (46), notamment en vue de l'entraînement des organes de coupe (43, 44, 45) dudit groupe de fauche (2 ; 210 ; 220).

## Claims

1. A mower (1) intended to be moved during work in a direction of advance (6) and comprising:
- a frame (3; 301; 302), and
- a mowing group (2; 210; 220) connected to the' said flame (3; 301; 302) by means of an articulation (4) having a geometric axis (5) directed at least approximately following the direction of advance (6) at work, and able to be moved from a first position where it extends at least approximately horizontally and transversely to the direction of advance (6) at work, into a second position where it extends upwards, by pivoting about the axis (5) of the said articulation (4),
the said flame (3; 301; 302) comprising:
- a hitching element (9; 91; 92) permitting the hitching of the mower (1) to a tractor vehicle (8) in such a way that the mowing group (2; 210; 220) extends at work laterally beside the path of the said tractor vehicle (8),
- a support beam (14; 141; 142) associated with the said mowing group (2; 210; 220) and to the outer end of which this latter is connected by means of the said articulation (4), and
- two connecting elements (15, 17; 151, 171; 152, 172) associated with the said support beam (14; 141; 142) and each connected to the hitching element (9; 91; 92) by means of a first articulation (18, 20; 181, 201; 182, 202) and to this support beam (14; 141; 142) by means of a second articulation (19, 21; 191, 211; 192, 212), the geometric axes of the said first articulations (18, 20; 181, 201; 182, 202) and of the said second articulations (19, 21; 191, 211; 192, 212) being at least approximately parallel to each other,
this hitching element (9; 91; 92), this support beam (14; 141; 142) and these two connecting elements (15, 17; 151, 171; 152, 172) forming a deformable quadrilateral (22; 221; 222) which additionally permits, for transport, to move the corresponding mowing group (2; 210; 220) transversely in the direction of the hitching element (9; 91; 92), and vice versa,
characterised in that it comprises, on the one hand, a manoeuvring element (67) associated with the said mowing group (2; 210; 220) and provided in order to pivot this latter at least from the first position into the second position and, on the other hand, control means (76; 761; 762) connected directly or indirectly to the said deformable quadrilateral (22; 221; 222) and cooperating with the corresponding manoeuvring element (67) in order to deform the said deformable quadrilateral (22; 221; 222) during the pivoting of the said mowing group (2; 210; 220) from its first position into its second position and vice versa.

2. A mower in accordance with claim 1, characterised in that the control means (76; 761; 762) deform the deformable quadrilateral (22; 221; 222) at least approximately simultaneously with the pivoting of the mowing group (2; 210; 220) from its first position into its second position and vice versa.

3. A mower in accordance with claim 1 or 2, characterised in that the said control means (76) comprise a control element (77) of fixed length connected at one of its ends to the hitching element (9) by means of a first articulation (78) and at the other of its ends to the mowing group (2) by means of a second articulation (79) arranged on the said mowing group (2) in such a way that, when the latter is pivoted into its second position, it pulls on the control element (77).

4. A mower in accordance with claim 1 or 2, characterised in that it comprises a pivoting element (171) associated with the said mowing group (210) and connected on the one hand to a hitching element (91) by means of a first articulation (201) whose geometric axis is approximately parallel to the geometric axes of the articulations (181, 191, 201, 211) of the deformable quadrilateral (221) and on the other hand to the support beam (141) by means of a second articulation (211) whose geometric axis is also approximately parallel to the geometric axes of the articulations (181, 191, 201, 211) of the deformable quadrilateral (221), and in that the control means (761) comprise a control element (771) of fixed length connected at one of its ends to this pivoting element (171) by means of a first articulation (781) arranged between the two articulations (201, 211) of the said pivoting element (171), and at the other end of its ends to the mowing group (210) by means of a second articulation (791) arranged on the mowing group (210) in such a way that, when the latter is pivoted into its second position the distance between this second articulation (791) connecting the control element (771) to the mowing group (210) and the second articulation (211) connecting the pivoting element (171) to the support beam (141) increases.

5. A mower in accordance with claim 1 or 2, characterised in that it comprises a pivoting element (172) associated with the said mowing group (220) and connected on the one hand to the hitching element (92) by means of a first articulation (202) whose geometric axis is approximately parallel to the geometric axes of the articulations (182, 192, 202, 212) of the deformable quadrilateral (221), and on the other hand to the support beam (142) by means of a second articulation (212) whose geometric axis is also approximately parallel to the geometric axes of the articulations (182, 192, 202, 212) of the deformable quadrilateral (222), and in that the control means (762) comprise a control element (772) of fixed length connected at one of its ends to this pivoting element (172) by means of a first articulation (782) arranged beyond the two articulations (202, 212) of the said pivoting element (172) and at the other of its ends to the mowing group (220) by means of a second articulation (792) arranged on the mowing group (220) in such a way that, when the latter is pivoted into its second position, the distance between this second articulation (792) connecting the control element (772) to the mowing group (220) and the second articulation (212) connecting the pivoting element (172) to the support beam (142) decreases.

6. A mower in accordance with claim 4 or 5, characterised in that the pivoting element (171; 172) is formed by one (171; 172) of the connecting elements (151, 171; 152, 172).

7. A mower in accordance with claim 6, characterised in that the pivoting element (171; 172) is formed by the connecting element (171; 172) furthest from the corresponding mowing group (210; 220).

8. A mower in accordance with at least one of claims 3 to 7, characterised in that, when the said mowing group (2; 210; 220) is in the normal mowing position, the articulations (78, 79; 781, 791; 782, 792) of the corresponding control element (77; 771; 772) extend in an at least approximately horizontal plane.

9. A mower in accordance with at least one of claims 3 to 8, characterised in that the first (78; 781; 782) and the second articulation (79; 791; 792) of the control element (77; 771; 772) are ball joints or universal joints.

10. A mower in accordance with at least one of claims 1 to 9, characterised in that in the work position, the connecting elements (15, 17; 151, 171; 152, 172) are inclined in the direction of the side where the mowing group (2; 210; 220) extends.

11. A mower in accordance with at least one of claims 1 to 10, characterised in that the geometric axes of the first articulations (18, 20; 181, 201; 182, 202) and the geometric axes of the second articulations (19, 21; 191, 211; 192, 212) of the two connecting elements (15, 17; 151, 171; 152, 172) are directed upwards.

12. A mower in accordance with claim 11, characterised in that the deformable quadrilateral (22; 221; 222) is deformable in an at least approximately horizontal plane.

13. A mower in accordance with claim 11 or 12, characterised in that one (15; 151; 152) of the said connecting elements (15, 17; 151, 171; 152, 172) is made in the form of a link and that the other connecting element (17; 171; 172) constitutes the support element by means of which the hitching element (9; 91; 92) supports the support beam (14; 141; 142) and the mowing group (2; 210; 220).

14. A mower in accordance with claim 13, characterised in that the connecting element (17; 171; 172) constituting the said support element is arranged at the end of the support beam (14; 141; 142) remote from the mowing group (2; 210; 220) and in that the other connecting element (15; 151; 152) extends between the said support element and the end of the said support beam (14; 141; 142) where the said mowing group (2; 210; 220) is connected.

15. A mower in accordance with claim 13 or 14, characterised in that the support beam (14; 141; 142) is, in a manner known in itself, connected to the connecting element (17; 171; 172) constituting the said corresponding support element by means of an articulation (38) whose geometric axis is directed at least approximately in the direction of advance (6) at work, and in that the first (18; 181; 182) and the second articulation (19; 191; 192) of the other connecting element (15; 151; 152) are ball joints or floating cylindrical joints with play.

16. A mower in accordance with at least one of claims 11 to 15, characterised in that the length of the connecting element (15; 151; 152) extending closest to the said mowing group (2; 210; 220) is greater than the length of the other connecting element (17; 171; 172), and in that in the working position, the said connecting element (15; 151; 152) extending closest to the said mowing group (2; 210; 220) is strongly inclined in the direction of the side where the said mowing group (2; 210; 220) extends.

17. A mower in accordance with at least one of claims 11 to 16, characterised in that the connecting element (15; 151; 152) extending closest to the said mowing group (2; 210; 220) is made in the form of a safety tie rod known in itself, whose length may be increased by a certain effort applied to its ends.

18. A mower in accordance with at least one of claims 1 to 17, characterised in that the said manoeuvring element (67) is connected at one of its ends to the frame (3; 301; 302) and at the other of its ends to the corresponding mowing group (2; 210; 220).

19. A mower in accordance with claim 18, characterised in that the end of the said manoeuvring element (67) connected to the frame (3; 301; 302) is connected directly or indirectly to one (17; 171; 172) of the two connecting elements (15, 17; 151, 171; 152, 172).

20. A mower in accordance with claim 19, characterised in that the said end of the said manoeuvring element (67) is connected directly or indirectly to the connecting element (17; 171; 172) furthest from the mowing group (2; 210; 220).

21. A mower in accordance with claim 19 or 20, characterised in that the said end of the said manoeuvring element (67) is connected directly or indirectly to the said connecting element (17; 171; 172) in the vicinity of the second articulation (21; 211; 212) connecting this connecting element (17; 171; 172) to the support beam (14; 141; 142).

22. A mower in accordance with at least one of claims 18 to 21, characterised in that the said manoeuvring element (67) is a hydraulic jack (68).

23. A mower in accordance with at least one of claims 1 to 22, characterised in that, in a manner known in itself, a lightening element (73), connected directly or indirectly to the hitching element (9; 91; 92) of the flame (3; 301; 302), lightens the said mowing group (2; 210; 220).

24. A mower in accordance with claim 23, characterised in that the end of the said lightening element (73) connected directly or indirectly to the hitching element (9; 91; 92) is connected directly or indirectly to one (17; 171; 172) of the two connecting elements (15, 17; 151, 171; 152, 172).

25. A mower in accordance with claim 24, characterised in that the said end of the said lightening element (73) is connected directly or indirectly to the connecting element (17; 171; 172) furthest from the corresponding mowing group (2; 210; 220).

26. A mower in accordance with claim 24 or 25, characterised in that the said end of the said lightening element (73) is connected directly or indirectly to the said connecting element (17; 171; 172) in the vicinity of the second articulation (21; 211; 212) connecting this connecting element (17; 171; 172) to the support beam (14; 141; 142).

27. A mower in accordance with at least one of claims 23 to 26, characterised in that the said lightening element (73) comprises at least a draw spring (74).

28. A mower in accordance with at least one of claims 1 to 27, characterised in that it comprises, in a manner known in itself, transmission means (58, 59, 60, 61) transmitting the rotation movement from the power take-off of the tractor vehicle (8) to the drive members (52, 53, 54, 55, 56) of the said mowing group (2; 210; 220) and comprising a transmission element (60) connected to the support beam (14; 141; 142), which receives the movement by means of a transmission shalt with universal joints (59), the said transmission element (60) being connected to the said support beam (14; 141; 142) in such a way that in the normal working position, the said transmission element (60) is out of alignment with the hitching element (9; 91; 92) in the direction of the said mowing group (2; 210; 220).

29. A mower in accordance with at least one of claims 1 to 28, characterised in that the said mowing group (2; 210; 220) comprises, at its end closest to the flame (3; 301; 302), a rotary drum (46) above which extends a return housing (49) which comprises an input shaft (52) whose axis of rotation coincides with the geometric axis (5) of the articulation (4) connecting the said mowing group (2; 210; 220) to the support beam (14; 141; 142) and which drives a drive shalt (55) passing through the said rotary drum (46), particularly in view to drive the cutting elements (43, 44, 45) of the said mowing (2; 210; 220).

## Patentansprüche

1. Mähmaschine (1), die während des Betriebs in einer Vorschubrichtung (6) bewegt werden soll und die:
- ein Gestell (3; 301; 302), und
- eine mit dem Gestell (3; 301; 302) mittels eines Gelenks (4) mit einer geometrischen, zumindest im wesentlichen in Arbeitsvorschubrichtung (6) gerichteten Achse (5) verbundene Mähergruppe (2; 210; 220), die durch Verschwenken um die Achse (5) des Gelenks (4) aus einer ersten Stellung, wo sie sich zumindest im wesentlichen horizontal und quer zur Arbeitsvorschubrichtung (6) erstreckt, in eine zweite Stellung bewegt werden kann, wo sie nach oben ragt,
umfasst,
welches Gestell (3; 301; 302):
- ein Kupplungsorgan (9; 91; 92), das ermöglicht, die Mähmaschine (1) an ein Schleppfahrzeug (8) derart anzukuppeln, dass sich die Mähergruppe (2; 210; 220) im Betrieb seitlich neben der Spur des Schleppfahrzeugs (8) befindet,
- einen der Mähergruppe (2; 210; 220) zugeordneten Stützbalken (14; 141; 142), mit dessen äusserem Ende sie über das Gelenk (4) verbunden ist, und
- zwei Verbindungsorgane (15, 17; 151, 171; 152, 172), die dem Stützbalken (14; 141; 142) zugeordnet sind und jeweils mit dem Kupplungsorgan (9; 91; 92) mittels eines ersten Gelenks (18, 20; 181, 201; 182, 202) und mit diesem Stützbalken (14; 141; 142) mittels eines zweiten Gelenks (19, 21; 191, 211; 192, 212) verbunden sind, wobei die geometrischen Achsen der ersten Gelenke (18, 20; 181, 201; 182, 202) und der zweiten Gelenke (19, 21; 191, 211; 192, 212) zumindest im wesentlichen parallel zueinander sind,
umfasst,
wobei dieses Kupplungsorgan (9; 91; 92), dieser Stützbalken (14; 141; 142) und diese beiden Verbindungsorgane (15, 17; 151, 171; 152, 172) ein verformbares Viereck (22; 221; 222) bilden, das ermöglicht, die entsprechende Mähergruppe (2; 210; 220) für den Transport ausserdem quer in Richtung des Kupplungsorgans (9; 91; 92) zu bewegen und umgekehrt,
dadurch gekennzeichnet, dass sie einerseits ein der Mähergruppe (2; 210; 220) zugeordnetes Betätigungsorgan (67), das für deren Verschwenkung zumindest aus der ersten Stellung in die zweite Stellung vorgesehen ist, und anderseits Steuermittel (76; 761; 762) umfasst, die direkt oder indirekt mit dem verformbaren Viereck (22; 221; 222) verbunden sind und mit dem entsprechenden Betätigungsorgan (67) zusammenwirken, um das verformbare Viereck (22; 221; 222) bei Verschwenkung der Mähergruppe (2; 210; 220) aus ihrer ersten Stellung in ihre zweite Stellung und umgekehrt zu verformen.

2. Mähmaschine nach Anspruch 1, dadurch gekennzeichnet, dass die Steuermittel (76; 761; 762) das verformbare Viereck (22; 221; 222) zumindest im wesentlichen gleichzeitig mit der Verschwenkung der Mähergruppe (2; 210; 220) aus ihrer ersten Stellung in ihre zweite Stellung und umgekehrt verformen.

3. Mähmaschine nach Anspruch 1 oder 2, dadurch gekennzeichnet, dass die Steuermittel (76) ein Steuerorgan (77) gegebener Länge umfassen, das an einem seiner Enden mittels eines ersten Gelenks (78) mit dem Kupplungsorgan (9) und an seinem anderen Ende mittels eines zweiten Gelenks (79) mit der Mähergruppe (2) verbunden ist, welches auf der Mähergruppe (2) derart angeordnet ist, dass die Mähergruppe (2) bei deren Verschwenken in ihre zweite Stellung an dem Steuerorgan (77) zieht.

4. Mähmaschine nach Anspruch 1 oder 2, dadurch gekennzeichnet, dass sie ein der Mähergruppe (210) zugeordnetes Schwenkorgan (171) umfasst, das einerseits mit dem Kupplungsorgan (91) mittels eines ersten Gelenks (201) mit zu den geometrischen Achsen der Gelenke (181, 191, 201, 211) des verformbaren Vierecks (221) im wesentlichen paralleler geometrischer Achse und anderseits mit dem Stützbalken (141) mittels eines zweiten Gelenks (211) mit zu den geometrischen Achsen der Gelenke (181, 191, 201, 211) des verformbaren Vierecks (221) ebenfalls im wesentlichen paralleler geometrischer Achse verbunden ist, und dass die Steuermittel (761) ein Steuerorgan (771) gegebener Länge umfassen, das an einem seiner Enden mit diesem Schwenkorgan (171) mittels eines ersten zwischen den beiden Gelenken (201, 211) des Schwenkorgans (171) angeordneten Gelenks (781) und an seinem anderen Ende mit der Mähergruppe (210) mittels eines zweiten Gelenks (791) verbunden ist, welches auf der Mähergruppe (210) derart angeordnet ist, dass bei Verschwenken der Mähergruppe (210) in ihre zweite Stellung der Abstand zwischen diesem das Steuerorgan (771) mit der Mähergruppe (210) verbindenden zweiten Gelenk (791) und dem das Schwenkorgan (171) mit dem Stützbalken (141) verbindenden zweiten Gelenk (211) zunimmt.

5. Mähmaschine nach Anspruch 1 oder 2, dadurch gekennzeichnet, dass sie ein der Mähergruppe (220) zugeordnetes Schwenkorgan (172) umfasst, das einerseits mit dem Kupplungsorgan (92) mittels eines ersten Gelenks (202) mit zu den geometrischen Achsen der Gelenke (182, 192, 202, 212) des verformbaren Vierecks (221) im wesentlichen paralleler geometrischer Achse und anderseits mit dem Stützbalken (142) mittels eines zweiten Gelenks (212) mit zu den geometrischen Achsen der Gelenke (182, 192, 202, 212) des verformbaren Vierecks (222) ebenfalls im wesentlichen paralleler geometrischer Achse verbunden ist, und dass die Steuermittel (762) ein Steuerorgan (772) gegebener Länge umfassen, das an einem seiner Enden mit diesem Schwenkorgan (172) mittels eines ersten jenseits der beiden Gelenke (202, 212) des Schwenkorgans (172) angeordneten Gelenks (782) und an seinem anderen Ende mit der Mähergruppe (220) mittels eines zweiten Gelenks (792) verbunden ist, welches auf der Mähergruppe (220) derart angeordnet ist, dass bei Verschwenken der Mähergruppe (220) in ihre zweite Stellung der Abstand zwischen diesem das Steuerorgan (772) mit der Mähergruppe (220) verbindenden zweiten Gelenk (792) und dem das Schwenkorgan (172) mit dem Stützbalken (142) verbindenden zweiten Gelenk (212) abnimmt.

6. Mähmaschine nach Anspruch 4 oder 5, dadurch gekennzeichnet, dass das Schwenkorgan (171; 172) von einem (171; 172) der Verbindungsorgane (151, 171; 152, 172) gebildet ist.

7. Mähmaschine nach Anspruch 6, dadurch gekennzeichnet, dass das Schwenkorgan (171; 172) von dem der entsprechenden Mähergruppe (210; 220) am weitesten entfernten Verbindungsorgan (171; 172) gebildet ist.

8. Mähmaschine nach zumindest einem der Ansprüche 3 bis 7, dadurch gekennzeichnet, dass sich die Gelenke (78, 79; 781, 791; 782, 792) des entsprechenden Steuerorgans (77; 771; 772), wenn sich die Mähergruppe (2; 210; 220) in normaler Mähstellung befindet, in einer zumindest im wesentlichen horizontalen Ebene befinden.

9. Mähmaschine nach zumindest einem der Ansprüche 3 bis 8, dadurch gekennzeichnet, dass das erste (78; 781; 782) und das zweite Gelenk (79; 791; 792) des Steuerorgans (77; 771; 772) Kugelgelenke oder Kardangelenke sind.

10. Mähmaschine nach zumindest einem der Ansprüche 1 bis 9, dadurch gekennzeichnet, dass die Verbindungsorgane (15, 17; 151, 171; 152, 172) in Arbeitsstellung in Richtung der Seite geneigt sind, wo sich die Mähergruppe (2; 210; 220) befindet.

11. Mähmaschine nach zumindest einem der Ansprüche 1 bis 10, dadurch gekennzeichnet, dass die geometrischen Achsen der ersten Gelenke (18, 20; 181, 201; 182, 202) und die geometrischen Achsen der zweiten Gelenke (19, 21; 191, 211; 192, 212) der beiden Verbindungsorgane (15, 17; 151, 171; 152, 172) aufwärts gerichtet sind.

12. Mähmaschine nach Anspruch 11, dadurch gekennzeichnet, dass das verformbare Viereck (22; 221; 222) in einer zumindest im wesentlichen horizontalen Ebene verformbar ist.

13. Mähmaschine nach Anspruch 11 oder 12, dadurch gekennzeichnet, dass eines (15; 151; 152) der Verbindungsorgane (15, 17; 151, 171; 152, 172) in Form einer Strebe ausgeführt ist und dass das andere Verbindungsorgan (17; 171; 172) das Tragorgan bildet, über das das Kupplungsorgan (9; 91; 92) den Stützbalken (14; 141; 142) und die Mähergruppe (2; 210; 220) trägt.

14. Mähmaschine nach Anspruch 13, dadurch gekennzeichnet, dass das Verbindungsorgan (17; 171; 172), das das Tragorgan bildet, an dem von der Mähergruppe (2; 210; 220) entfernten Ende des Stützbalkens (14; 141; 142) angeordnet ist und dass sich das andere Verbindungsorgan (15; 151; 152) zwischen dem Tragorgan und dem Ende des Stützbalkens (14; 141; 142) befindet, mit dem die Mähergruppe (2; 210; 220) verbunden ist.

15. Mähmaschine nach Anspruch 13 oder 14, dadurch gekennzeichnet, dass der Stützbalken (14; 141; 142) in an sich bekannter Weise, mit dem das entsprechende Tragorgan bildenden Verbindungsorgan (17; 171; 172) mittels eines Gelenks (38) mit zumindest im wesentlichen in Arbeitsvorschubrichtung (6) ausgerichteter geometrischer Achse verbunden ist und dass das erste (18; 181; 182) und das zweite Gelenk (19; 191; 192) des anderen Verbindungsorgans (15; 151; 152) Kugelgelenke oder Zylindergelenke mit Spiel sind.

16. Mähmaschine nach zumindest einem der Ansprüche 11 bis 15, dadurch gekennzeichnet, dass die Länge des der Mähergruppe (2; 210; 220) am nächsten befindlichen Verbindungsorgans (15; 151; 152) grösser als die Länge des anderen Verbindungsorgans (17; 171; 172) ist und dass das der Mähergruppe (2; 210; 220) am nächsten befindlichen Verbindungsorgan (15; 151; 152) in Arbeitsstellung stark in Richtung der Seite geneigt ist, wo sich die Mähergruppe (2; 210; 220) befindet.

17. Mähmaschine nach zumindest einem der Ansprüche 11 bis 16, dadurch gekennzeichnet, dass das Verbindungsorgan (15; 151; 152), das sich am nächsten bei der Mähergruppe (2; 210; 220) befindet, in Form einer an sich bekannten Sicherheitszugstange ausgebildet ist, deren Länge zuzunehmen vermag, sobald eine gewisse Kraft an ihren Enden ausgeübt wird.

18. Mähmaschine nach zumindest einem der Ansprüche 1 bis 17, dadurch gekennzeichnet, dass das Betätigungsorgan (67) an einem seiner Enden mit dem Gestell (3; 301; 302) und an seinem anderen Ende mit der entsprechenden Mähergruppe (2; 210; 220) verbunden ist.

19. Mähmaschine nach Anspruch 18, dadurch gekennzeichnet, dass das mit dem Gestell (3; 301; 302) verbundene Ende des Betätigungsorgans (67) direkt oder indirekt mit einem (17; 171; 172) der beiden Verbindungsorgane (15, 17; 151, 171; 152, 172) verbunden ist.

20. Mähmaschine nach Anspruch 19, dadurch gekennzeichnet, dass das Ende des Betätigungsorgans (67) direkt oder indirekt mit dem der Mähergruppe (2; 210; 220) am weitesten entfernten Verbindungsorgan (17; 171; 172) verbunden ist.

21. Mähmaschine nach Anspruch 19 oder 20, dadurch gekennzeichnet, dass das Ende des Betätigungsorgans (67) direkt oder indirekt mit dem Verbindungsorgan (17; 171; 172) in der Nähe des zweiten Gelenks (21; 211; 212), das dieses Verbindungsorgan (17; 171; 172) mit dem Stützbalken (14; 141; 142) verbindet, verbunden ist.

22. Mähmaschine nach zumindest einem der Ansprüche 18 bis 21, dadurch gekennzeichnet, dass das Betätigungsorgan (67) ein Hydraulikzylinder (68) ist.

23. Mähmaschine nach zumindest einem der Ansprüche 1 bis 22, dadurch gekennzeichnet, dass ein direkt oder indirekt mit dem Kupplungsorgan (9; 91; 92) des Gestells (3; 301; 302) verbundenes Entlastungsorgan (73) die Mähergruppe (2; 210; 220) in an sich bekannter Weise entlastet.

24. Mähmaschine nach Anspruch 23, dadurch gekennzeichnet, dass das Ende des direkt oder indirekt mit dem Kupplungsorgan (9; 91; 92) verbundenen Entlastungsorgans (73) direkt oder indirekt mit einem (17; 171; 172) der beiden Verbindungsorgane (15, 17; 151, 171; 152, 172) verbunden ist.

25. Mähmaschine nach Anspruch 24, dadurch gekennzeichnet, dass das Ende des Entlastungsorgans (73) direkt oder indirekt mit dem der entsprechenden Mähergruppe (2; 210; 220) am weitesten entfernten Verbindungsorgan (17; 171; 172) verbunden ist.

26. Mähmaschine nach Anspruch 24 oder 25, dadurch gekennzeichnet, dass das Ende des Entlastungsorgans (73) direkt oder indirekt mit dem Verbindungsorgan (17; 171; 172) in der Nähe des zweiten Gelenks (21; 211; 212), das dieses Verbindungsorgan (17; 171; 172) mit dem Stützbalken (14; 141; 142) verbindet, verbunden ist.

27. Mähmaschine nach zumindest einem der Ansprüche 23 bis 26, dadurch gekennzeichnet, dass das Entlastungsorgan (73) zumindest eine Zugfeder (74) aufweist.

28. Mähmaschine nach zumindest einem der Ansprüche 1 bis 27, dadurch gekennzeichnet, dass es, in an sich bekannter Weise, Transmissionsmittel (58, 59, 60, 61) anWeist, die die Rotationsbewegung von der Zapfwelle des Schleppfahrzeugs (8) bis zu den Antriebsorganen (52, 53, 54, 55, 56) der Mähergruppe (2; 210; 220) übertragen und ein mit dem Stützbalken (14; 141, 142) verbundenes Transmissionsorgan (60) umfassen, das die Bewegung mittels einer Transmissionswelle mit Kardangelenken (59) empfängt, welches Transmissionsorgan (60) mit dem Stützbalken (14; 141; 142) derart verbunden ist, dass das Transmissionsorgan (60) in normaler Arbeitsstellung in bezug auf das Kupplungsorgan (9; 91; 92) in Richtung der Mähergruppe (2; 210; 220) versetzt ist.

29. Mähmaschine nach zumindest einem der Ansprüche 1 bis 28, dadurch gekennzeichnet, dass die Mähergruppe (2; 210; 220) an ihrem dem Gestell (3; 301; 302) am nächsten befindlichen Ende eine drehbare Trommel (46) umfasst, über welcher sich ein Getriebegehäuse (49) befindet, das eine Eingangswelle (52) aufweist, deren Rotationsachse mit der geometrischen Achse (5) des die Mähergruppe (2; 210; 220) mit dem Stützbalken (14; 141; 142) verbindenden Gelenks (4) zusammenfällt und die eine die drehbare Trommel (46) durchsetzende Antriebswelle (55) antreibt, insbesonders zwecks Antrieb der Schneidorgane (43, 44, 45) der Mähergruppe (2; 210; 220).
